# EUROPEAN PATENT APPLICATION

(11) **EP 3 079 371 A1**
(43) Date of publication of application: **12.10.2016**
(21) Application number: 14794414.4
(22) Date of filing: 15.05.2014
(51) Int. Cl.: H04N 21/238

(54) **METHOD, DEVICE AND EQUIPMENT FOR ACHIEVING HEVC HIGH DEFINITION NETWORK ELEMENT ACCESS**

(30) Priority: 04.12.2013 CN 201310648902
(71) Applicant: ZTE Corporation, Shenzhen, Guangdong 518057 (CN)
(72) Inventor: ZHANG, Qiang, Shenzhen, Guangdong 518057 (CN); WU, Yongming, Shenzhen, Guangdong 518057 (CN); LIU, Zhipeng, Shenzhen, Guangdong 518057 (CN)
(74) Representative: Carangelo, Pierluigi
(86) International application number: PCT/CN2014/077606
(87) International publication number: WO 2014/180366

(57) **Abstract**

Provided are a method, device and terminal for implementing High Efficiency Video Coding (HEVC) high-definition network element access. The method includes: sending interactive signalling to a second terminal, and confirming the completion of signalling interaction after receiving corresponding signalling from the second terminal; sending a terminal capability set to the second terminal and receiving the terminal capability set of the second terminal; acquiring HEVC public capabilities, constructing an open logical channel in accordance with the terminal capability set of the first terminal and with the HEVC public capabilities, and sending same to the second terminal; sending a media code stream to the second terminal using the open logical channel and receiving the media code stream from the second terminal, so as to implement high-definition interconnectivity. By defining a private HECV capability within a private capability set structure code, HEVC high-definition network element access is implemented, the media code stream interconnectivity and high-definition interconnectivity are achieved, and the video conference definition and working efficiency are improved.

## Description

### Technical Field

The present disclosure relates to the field of video conference, and in particular to a method, a device and terminal for implementing High Efficiency Video Coding (HEVC) high-definition network element access.

### Background

Compared with the traditional communication modes, the video conference system not only improves work efficiency, but also avoids the long journey of the participants, and can further meet the requirement of emergency processing and multi-party communication and coordination, which is a resource-reservation, time-saving and high-efficiency conference mode.

With the development of video conference, people put forward a higher and higher demand on definition, such as high-definition, super-definition. HEVC, as a new video compression standard, can better bear the high-definition video. However, the present H.323 protocol has not set up an interaction mechanism towards HEVC video capabilities.

H.323, which is a suggestion of the 16^{th} work group of International Telecommunication Union Telecommunication Standardization Sector (ITU-T), is formed by a group of protocols, including signalling for encoding, decoding and packaging audio and video signals, signalling for call signal sending, receiving and control, and signalling for capability exchange. At present, H.323 is widely applied to phone-to-phone carrier-grade networks.

### Summary

The embodiment of the present disclosure provides a method, a device and terminal for implementing HEVC high-definition network element access, which based on H.323 protocol can realize HEVC high-definition network element access, and improve video conference definition and work efficiency.

According to one aspect of the present disclosure, the embodiment of the present disclosure provides a method for implementing HEVC high-definition network element access, which is applied to a first terminal, including the following steps:
sending interactive signalling to a second terminal, and confirming the completion of signalling interaction after receiving corresponding signalling from the second terminal;
sending a terminal capability set to the second terminal and receiving the terminal capability set of the second terminal;
acquiring HEVC public capabilities, constructing an open logical channel in accordance with the terminal capability set of the first terminal and with the HEVC public capabilities, and sending same to the second terminal;
sending a media code stream to the second terminal using the open logical channel and receiving the media code stream of the second terminal, thus implementing high-definition interconnectivity.

The step of sending a terminal capability set to the second terminal specifically includes:
describing an HEVC capability in accordance with a private capability set structure code;
constructing a terminal capability set in accordance with the HEVC capability;
sending the terminal capability set to the second terminal.

Further, the step of describing an HEVC capability in accordance with a private capability set structure code specifically includes:
defining, in the private capability set structure code, the function name of the first terminal, the capability identifier type of the first terminal, the capability identifier value of the first terminal and the maximum bandwidth of the first terminal.

The step of acquiring HEVC public capabilities, constructing an open logical channel in accordance with the terminal capability set of the first terminal and with the HEVC public capabilities, and sending same to the second terminal specifically includes:
calculating HEVC public capabilities and determining the open logical channel, by defining the values of multiple variables;
sending the open logical channel to the second terminal.

Further, the multiple variables specifically include:

Profile ID and Level value.

Further, the multiple variables include: maximum pixel rate, frame value and/or maximum code stream.

The embodiment of the present disclosure also provides a device for implementing HEVC high-definition network element access, which is applied to a first terminal, the device includes:
a first confirmation module, which is configured to send interactive signalling to a second terminal, and to confirm the completion of signalling interaction after receiving corresponding signalling from the second terminal;
an acquisition module, which is configured to send a terminal capability set to the second terminal and to receive the terminal capability set of the second terminal;
a second confirmation module, which is configured to acquire HEVC public capabilities, to construct an open logical channel in accordance with the terminal capability set of the first terminal and with the HEVC public capabilities and to send same to the second terminal;
an execution module, which is configured to send a media code stream to the second terminal using the open logical channel and to receive the media code stream of the second terminal, thus to achieve high-definition interconnectivity.

The acquisition module further includes:
a description unit, which is configured to describe an HEVC capability in accordance with a private capability set structure code;
a construction unit, which is configured to construct a terminal capability set in accordance with the HEVC capability;
a first sending unit, which is configured to send the terminal capability set to the second terminal.

The embodiment of the present disclosure also provides terminal, which is configured to: send interactive signalling to other terminal, and confirm the completion of signalling interaction after receiving corresponding signalling from the other terminal; send a terminal capability set to the other terminal and receive the terminal capability set of the other terminal; acquire HEVC public capabilities, construct an open logical channel in accordance with the terminal capability set of the terminal and with the HEVC public capabilities, and send same to the other terminal; send a media code stream to the other terminal using the open logical channel and receive the media code stream of the other terminal, thus to achieve high-definition interconnectivity.

Further, the terminal is configured to describe an HEVC capability in accordance with a private capability set structure code, construct a terminal capability set of the terminal in accordance with the HEVC capability and send the terminal capability set to the other terminal.

The above technical scheme of the embodiment of the present disclosure has advantages as follows:
in the method provided in the embodiment of the present disclosure for implementing HEVC high-definition network element access, by defining a private HECV capability within a private capability set structure code, the present disclosure realizes the purpose of HEVC capability interaction, thereby implementing HEVC high-definition network element access, achieving media code stream interconnectivity and finally achieving high-definition interconnectivity, improving video conference definition and raising working efficiency.

### Brief Description of the Drawings

Fig. 1 is a schematic diagram of a method for implementing HEVC high-definition network element access according to the embodiment of the present disclosure;
Fig. 2 is a module diagram of a device for implementing HEVC high-definition network element access according to the embodiment of the present disclosure;
Fig. 3 is a flowchart of a video conference terminal accessing an HEVC high-definition terminal according to the embodiment of the present disclosure;
Fig. 4 is a flowchart of a Multipoint Control Unit (MCU) accessing an HEVC high-definition terminal according to the embodiment of the present disclosure; and
Fig. 5 is a flowchart of an MCU1 intercommunicating with an MCU2 using HEVC capabilities according to the embodiment of the present disclosure.

### Detailed Description of the Embodiments

The technical problem to be solved, the technical scheme and the advantages of the present disclosure will become more clearly understood from the detailed description below taken in conjunction with accompanying drawings and specific embodiments.

Aiming at the problem that the H.323 protocol has not set up an interaction mechanism towards HEVC video capabilities in related art, the present disclosure provides a method, a device and terminal for implementing HEVC high-definition network element access, which, by defining a private HECV capability within a private capability set structure code, realize the purpose of HEVC capability interaction, thereby implementing HEVC high-definition network element access, implementing media code stream interconnectivity and finally achieving high-definition interconnectivity, improving video conference definition and work efficiency.

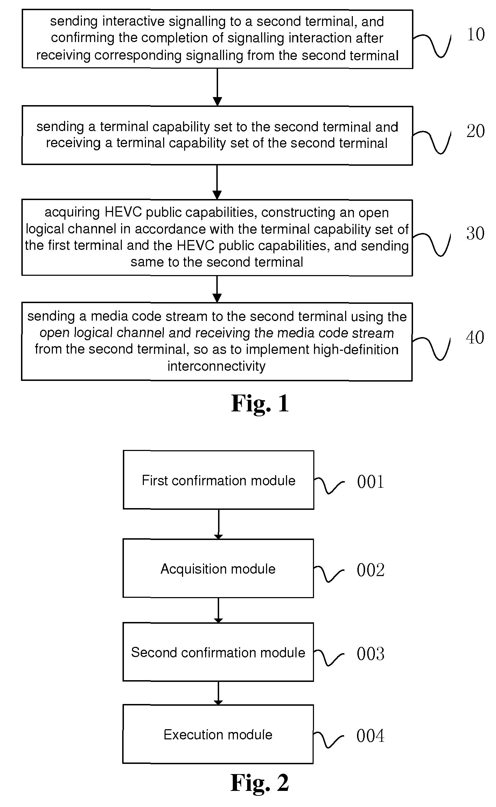

As shown in Fig. 1, the embodiment of the present disclosure provides a method for implementing HEVC high-definition network element access, which is applied to a first terminal, including the following steps:
S10: sending interactive signalling to a second terminal, and confirming the completion of signalling interaction after receiving corresponding signalling from the second terminal.
S20: sending a terminal capability set to the second terminal and receiving the terminal capability set of the second terminal.
S30: acquiring HEVC public capabilities, constructing an open logical channel in accordance with the terminal capability set of the first terminal and with the HEVC public capabilities, and sending same to the second terminal.
S40: sending a media code stream to the second terminal using the open logical channel and receiving the media code stream of the second terminal, thus achieving high-definition interconnectivity.

In the above embodiment of the present disclosure, the interactive signalling sent to the second terminal in S10 is Q931 signalling, but not limited to Q931 signalling; all signalling capable of realizing the same function as Q931 signalling is applicable to the present disclosure. In S30 the terminal capability set of the first terminal and the HEVC public capabilities are expressed depending on the user-defined variable value in the private capability set structure code; changing the value of each of the above variables can obtain a logical channel corresponding to the optimized HEVC capability, and this logical channel is opened to the second terminal, meanwhile the second terminal also needs to open a corresponding logical channel to the first terminal. Then S40 is executed, that is, a media code stream is sent to the second terminal through the open logical channel, specifically, the sent media code stream is a media code stream of the optimized HEVC capability, meanwhile, a media code stream sent by the second terminal through the open logical channel is received, thus high-definition interconnectivity is realized.

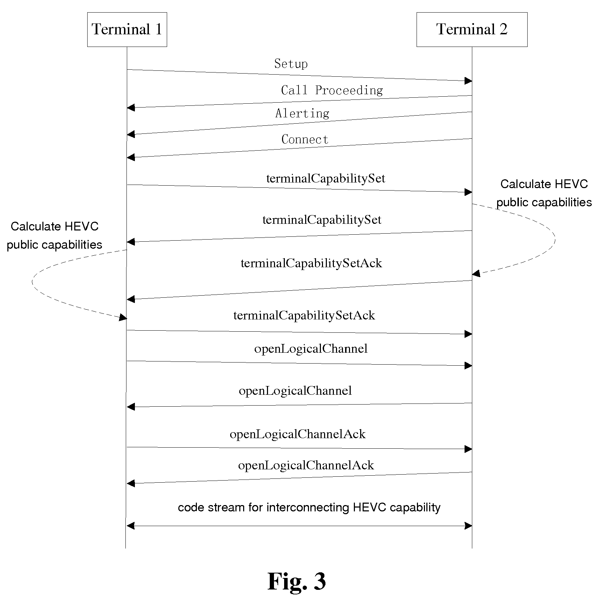

In the embodiment of the present disclosure, both the first terminal and the second terminal might be a video conference terminal, or might be an MCU. For example:
as shown in Fig. 3, in this embodiment, both the first terminal and the second terminal are a video conference terminal, which are called terminal 1 and terminal 2 respectively; specifically, this embodiment includes the following steps:
   S311: terminal 1 and terminal 2 complete Q931 signalling interaction.
   S312: terminal 1 and terminal 2 respectively describe an HEVC capability and construct a terminal capability set to send to each other, according to the method described in the present disclosure.
   S313: terminal 1 and terminal 2 respectively calculate HEVC public capabilities according to the method described in the present disclosure, and meanwhile construct an open logical channel to send to each other according to the terminal capability set mentioned in S312, describing the optimized HEVC capability.
   S314: terminal 1 and terminal 2 send a media code stream to each other through the open logical channel, thereby realizing high-definition interconnectivity.

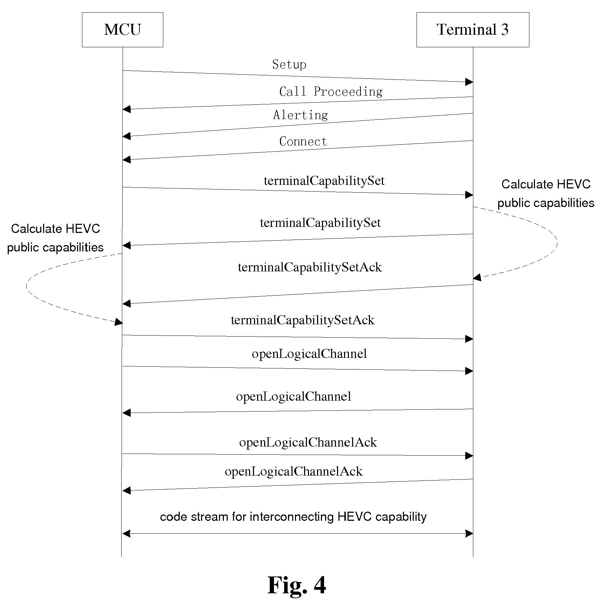

As shown in Fig. 4, in this embodiment the first terminal is a MCU while the second terminal is a video conference terminal (called terminal 3); specifically, this embodiment includes the following steps:
S411: MCU and terminal 3 complete Q931 signalling interaction.
S412: MCU and terminal 3 respectively describe an HEVC capability and construct a terminal capability set to send to each other, according to the method described in the present disclosure.
S413: MCU and terminal 3 respectively calculate HEVC public capabilities according to the method described in the present disclosure, and meanwhile construct an open logical channel to send to each other according to the terminal capability set mentioned in S412.
S414: MCU and terminal 3 send a media code stream to each other through the open logical channel, thereby realizing high-definition interconnectivity.

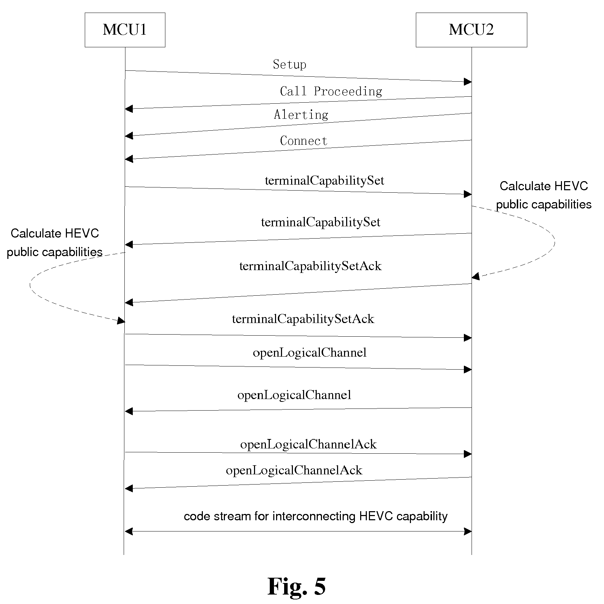

As shown in Fig. 5, in this embodiment both the first terminal and the second terminal are an MCU, which are called MCU1 and MCU2 respectively; specifically, this embodiments includes the following steps:
S511: MCU1 and MCU2 complete Q931 signalling interaction.
S512: MCU1 and MCU2 respectively describe an HEVC capability and construct a terminal capability set to send to each other, according to the method described in the present disclosure.
S513: MCU1 and MCU2 respectively calculate HEVC public capabilities according to the method described in the present disclosure, and meanwhile construct an open logical channel to send to each other according to the terminal capability set mentioned in S512.
S514: MCU1 and MCU2 send a media code stream to each other through the open logical channel, thereby realizing high-definition interconnectivity.

In each of the above embodiments, by defining a private HECV capability within a private capability set structure code, the present disclosure realizes the purpose of HEVC capability interaction, thereby implementing HEVC high-definition network element access, achieving media code stream interconnectivity and finally achieving high-definition interconnectivity, improving video conference definition and raising working efficiency.

In the above embodiment of the present disclosure, S20 specifically includes:
S201: describing an HEVC capability in accordance with a private capability set structure code.
S202: constructing a terminal capability set in accordance with the HEVC capability.
S203: sending the terminal capability set to the second terminal.

In the above embodiment of the present disclosure, the private capability set structure code in S201 specifically is: Video Capability structure contains a generic Video Capability option, which is a Generic Capability type. Generic Capability is defined as follows:

```
    Generic Capability ::=SEQUENCE
    {
    Capability Identifier Capability Identifier,
     Max BitRateINTEGER (0..4294967295) OPTIONAL,
    collapsing SEQUENCE OF Generic Parameter OPTIONAL, --use, transmit
 profile, level and the like
     nonCollapsing SEQUENCE OF Generic Parameter OPTIONAL, -- don't use
     nonCollapsing Raw OCTET STRING OPTIONAL, --don't use
                     --Typically contains ASN.1
                     --PER encoded data describing capability
    Transport DataProtocolCapability OPTIONAL,--don't use
    ...
    }
    Generic Parameter ::=SEQUENCE
    {
        Parameter Identifier Parameter Identifier,
        Parameter Value Parameter Value,
        supersedes SEQUENCE OF Parameter Identifier OPTIONAL,
    }
```

wherein the field Collapsing is used to transmit Profile, Level, self-defined frame format and other information.

In the above embodiment of the present disclosure, S201 specifically includes:
defining, in the private capability set structure code, the function name of the first terminal, the capability identifier type of the first terminal, the capability identifier value of the first terminal and the maximum bandwidth of the first terminal.

In the embodiment of the present disclosure, the HEVC capability is described through a private capability set structure code; all needed parameters are illustrated in the following table.

| Function name | HEVC Video Capabilities |
|---|---|
| Capability identifier type | Non-Standard |
| Capability identifier value | h221 NonStandard |
| Maximum bandwidth | Maximum bandwidth must exist, the measure unit is 100bit/s |
| collapsing | Containing profile, level and other optional parameters |
| nonCollapsing | Don't use |
| nonCollapsingRaw | Don't use |
| transport | Don't use |

In the above embodiment of the present disclosure S30 specifically includes:
S301: calculating HEVC public capabilities and determining the open logical channel, by defining the values of multiple variables.
S302: sending the open logical channel to the second terminal.

In the embodiment of the present disclosure, the HEVC-format capability interaction can be realized by defining the value of each variable after the terminal capability set is constructed, wherein the multiple variables specifically include:

Profile ID and Level value.

In the above embodiment of the present disclosure, Profile ID and Level value belong to user-defined variables; in addition the variable might further include variables optionally defined according to actual conditions, such as maximum pixel rate, frame value and/or maximum code stream.

A specific definition example is provided below; specific values defined by each variable below are a preferred embodiment of the present disclosure, other values capable of realizing the variable are applicable to the present disclosure.

First, the capability identifier is defined by adopting an OID mode:

```
     Non Standard Parameter ::=SEQUENCE
    {
     Non Standard Identifier Non Standard Identifier,
    data OCTET STRING --4 bytes, reserved to 0
    }
    Wherein the type of NonStandardldentifier is object identifier.
     Non Standard Identifier ::=CHOICE
    {
    Object OBJECT IDENTIFIER,
    ...
    }
    object is "1 3 6 1 4 1 3902 3013"
    data is a 4-byte octetstring, reserved to 0.
```

Here, parameter Profile space is not negotiable, defaulted to 0.

Parameter Profile id is a Boolean array, specifically an octetstring, where Bit 1-3 is reserved, set to 0; Bit 4-8 is: 1: Main Profile; 2: Main 10 Profile; 3: Main Still Picture Profile, and other values are not used temporarily. In the specific embodiment of the present disclosure, Profile id is set to 2, as shown in Table 1:

**Table 1 Parameter Profile id**

| Parameter name | Profile id |
|---|---|
| Parameter description | This parameter is a Boolean array. |
| | Bit 1-3 is reserved, set to 0 |
| | Bit4-8: |
| | 1: Main Profile |
| | 2: Main 10 Profile |
| | 3: Main Still Picture Profile |
| | Other values are not used temporarily |
| Parameter id value | 2 |
| Parameter state | Must exist |
| Parameter type | Boolean array |
| Substitutional relation | None |

Parameter Tier flag is not negotiable, defaulted to 0.

For the value of parameter Level, select the system supported level, wherein the valid level value is determined by the HEVC standard definition. In the specific embodiment of the present disclosure, the value of Level is set to 4, and the type of Level is unsigned Min, as shown in Table 2:

**Table 2 Value of Parameter Level**

| | |
|---|---|
| Parameter name | Level |
| Parameter description | System supported level, valid level value refers to HEVC standard definition |
| Parameter id value | 4 |
| Parameter state | Must exist |
| Parameter type | Unsigned Min |
| Substitutional relation | None |

For the parameter maximum pixel rate (max-Is), the unit is pixel/second, similar to the maximum macro block rate in H.264. In the specific embodiment of the present disclosure, the value of max-Is is set to 6 and the type of max-Is is unsigned32Min, as shown in Table 3.

**Table 3 Maximum Pixel Rate (max-Is)**

| | |
|---|---|
| Parameter name | Max-Is |
| Parameter description | User-defined maximum pixel rate, with unit of pixel/second, similar to the maximum macro block rate in H.264. This parameter, together with Max-Ips, |
| | can be used to calculate a user-defined frame frequency |
| Parameter id value | 6 |
| Parameter state | Optional |
| Parameter type | Unsigned32Min |
| Substitutional relation | None |

For the parameter frame value (max-Ips), the frame value is user-defined, with unit of pixel, wherein the parameter max-Ips together with the parameter max-Is can be used to calculate a user-defined frame frequency. In the specific embodiment of the present disclosure, the value of max-Ips is 8 and the type of max-Ips is unsigned32Min, as shown in Table 4:

**Table 4 Frame Value (max-lps)**

| | |
|---|---|
| Parameter name | max-Ips |
| Parameter description | User-defined frame size, with unit of pixel |
| Parameter id value | 8 |
| Parameter state | Optional |
| Parameter type | Unsigned32Min |
| Substitutional relation | None |

For the parameter maximum code stream (max-br), the code stream is user-defined, with unit of 1100bit/s. In the specific embodiment of the present disclosure, the value of max-br is 10 and the type of max-br is unsigned32Min, as shown in Table 5:

**Table 5 Maximum Code Stream (max-br)**

| | |
|---|---|
| Parameter name | max-br |
| Parameter description | User-defined maximum code stream, with unit of 1100bit/s |
| Parameter id value | 10 |
| Parameter state | Optional |
| Parameter type | Unsigned32Min |
| Substitutional relation | None |

In the above specific embodiment of the present disclosure, the definition of all variables is non-substitutable.

As shown in Fig. 2, the embodiment of the present disclosure also provides a device for implementing HEVC high-definition network element access, which is applied to a first terminal, including:
a first confirmation module 001, which is configured to send interactive signalling to a second terminal, and to confirm the completion of signalling interaction after receiving corresponding signalling from the second terminal;
an acquisition module 002, which is configured to send a terminal capability set to the second terminal and to receive the terminal capability set of the second terminal;
a second confirmation module 003, which is configured to acquire HEVC public capabilities, to construct an open logical channel in accordance with the terminal capability set of the first terminal and with the HEVC public capabilities and to send same to the second terminal;
an execution module 004, which is configured to send a media code stream to the second terminal using the open logical channel and to receive the media code stream of the second terminal, thus to achieve high-definition interconnectivity.

The acquisition module 002 further includes:
a description unit, which is configured to describe an HEVC capability in accordance with a private capability set structure code;
a construction unit, which is configured to construct a terminal capability set in accordance with the HEVC capability;
a first sending unit, which is configured to send the terminal capability set to the second terminal.

The description unit further includes:
a sub-description unit, which is configured to define, in the private capability set structure code, the function name of the first terminal, the capability identifier type of the first terminal, the capability identifier value of the first terminal and the maximum bandwidth of the first terminal.

The second confirmation module 003 further includes:
a definition unit, which is configured to calculate HEVC public capabilities and to determine the open logical channel, by defining the values of multiple variables;
a second sending unit, which is configured to send the open logical channel to the second terminal.

Further, the multiple variables involved in the definition unit specifically include: Profile ID and Level value. Preferably, the multiple variables involved in the definition unit further include: maximum pixel rate, frame value and/or maximum code stream.

In the method provided in the embodiment of the present disclosure for implementing HEVC high-definition network element access, by defining a private HECV capability within a private capability set structure code, the present disclosure realizes the purpose of HEVC capability interaction, thereby implementing HEVC high-definition network element access, achieving media code stream interconnectivity and finally achieving high-definition interconnectivity, improving video conference definition and raising working efficiency. All the embodiments of the above method for implementing HEVC high-definition network element access and advantages thereof are applicable to this device.

The embodiment of the present disclosure also provides terminal, which is configured to: send interactive signalling to other terminal, and confirm the completion of signalling interaction after receiving corresponding signalling from the other terminal; send a terminal capability set to the other terminal and receive the terminal capability set of the other terminal; acquire HEVC public capabilities, construct an open logical channel in accordance with the terminal capability set of the terminal and with the HEVC public capabilities, and send same to the other terminal; send a media code stream to the other terminal using the open logical channel and receive the media code stream of the other terminal, thus to achieve high-definition interconnectivity.

Further, the terminal is configured to describe an HEVC capability in accordance with a private capability set structure code, construct a terminal capability set of the terminal in accordance with the HEVC capability and send the terminal capability set to the other terminal.

In the above embodiment of the terminal of the present disclosure, the terminal might be a video conference terminal or might be a MCU, but not limited to this; all devices capable of realizing the function of MCU or video conference terminal are applicable to the embodiment of the present disclosure; moreover, the above specific embodiments for realizing the method and device for implementing HEVC high-definition network element access all can achieve the same advantage in this terminal.

The above are the preferred implementations of the present disclosure. It should be noted that, for the skilled person in the art, multiple improvements and modifications can be made without departing from the principle of the present disclosure, and these improvements and modifications shall fall into the scope of protection of the present disclosure.

## Claims

1. A method for implementing High Efficiency Video Coding (HEVC) high-definition network element access, which is applied to a first terminal, comprising:
sending interactive signalling to a second terminal, and confirming the completion of signalling interaction after receiving corresponding signalling from the second terminal;
sending a terminal capability set to the second terminal and receiving a terminal capability set of the second terminal;
acquiring HEVC public capabilities, constructing an open logical channel in accordance with the terminal capability set of the first terminal and the HEVC public capabilities, and sending the open logical channel to the second terminal;
sending a media code stream to the second terminal using the open logical channel and receiving a media code stream from the second terminal, so as to implement high-definition interconnectivity.

2. The method according to claim 1, wherein the step of sending a terminal capability set to the second terminal further comprises:
describing an HEVC capability in accordance with a private capability set structure code;
constructing a terminal capability set in accordance with the HEVC capability;
sending the terminal capability set to the second terminal.

3. The method according to claim 2, wherein the step of describing an HEVC capability in accordance with a private capability set structure code further comprises:
defining, in the private capability set structure code, the function name of the first terminal, the capability identifier type of the first terminal, the capability identifier value of the first terminal and the maximum bandwidth of the first terminal.

4. The method according to claim 1, wherein the step of acquiring HEVC public capabilities, constructing an open logical channel in accordance with the terminal capability set of the first terminal and with the HEVC public capabilities, and sending same to the second terminal further comprises:
calculating the HEVC public capabilities and determining the open logical channel by defining the values of multiple variables;
sending the open logical channel to the second terminal.

5. The method according to claim 4, wherein the multiple variables comprise: Profile ID and Level value.

6. The method according to claim 5, wherein the multiple variables further comprise: maximum pixel rate, frame value and/or maximum code stream.

7. A device for implementing High Efficiency Video Coding (HEVC) high-definition network element access, which is applied to a first terminal, comprising:
a first confirmation module, which is configured to send interactive signalling to a second terminal, and to confirm the completion of signalling interaction after receiving corresponding signalling from the second terminal;
an acquisition module, which is configured to send a terminal capability set to the second terminal and to receive a terminal capability set of the second terminal;
a second confirmation module, which is configured to acquire HEVC public capabilities, to construct an open logical channel in accordance the terminal capability set of the first terminal and with the HEVC public capabilities, and to send same to the second terminal;
an execution module, which is configured to send a media code stream to the second terminal using the open logical channel and to receive a media code stream from the second terminal, so as to implement high-definition interconnectivity.

8. The device according to claim 7, wherein the acquisition module further comprises:
a description unit, which is configured to describe an HEVC capability in accordance with a private capability set structure code;
a construction unit, which is configured to construct a terminal capability set in accordance with the HEVC capability;
a first sending unit, which is configured to send the terminal capability set to the second terminal.

9. terminal, comprising a processor, which is configured to execute the following operations:
sending interactive signalling to other terminal, and confirming the completion of signalling interaction after receiving corresponding signalling from the other terminal;
sending a terminal capability set to the other terminal and receiving the terminal capability set of the other terminal;
acquiring HEVC public capabilities, constructing an open logical channel in accordance with the terminal capability set of the terminal and with the HEVC public capabilities, and sending same to the other terminal;
sending a media code stream to the other terminal using the open logical channel and receiving a media code stream from the other terminal, so as to e implement high-definition interconnectivity.

10. The terminal according to claim 9, wherein the processor is further configured to execute the following operation:
describing an HEVC capability in accordance with a private capability set structure code, constructing a terminal capability set of the terminal in accordance with the HEVC capability, and sending the terminal capability set to the other terminal.
